# EUROPÄISCHE PATENTSCHRIFT

(11) **EP 0 919 561 B1**
(45) Veröffentlichungstag und Bekanntmachung des Hinweises auf die Patenterteilung: **18.02.2004**
(21) Anmeldenummer: 98121821.7
(22) Anmeldetag: 17.11.1998
(51) Int. Cl.: C07F 9/30

(54) **Verfahren zur Herstellung von Aryl-alkylphosphinsäuren**
Process for the preparation of aryl-alkylphosphinic acids
Procédé pour la préparation d'acides aryl-alkylphosphiniques

(30) Priorität: 28.11.1997 DE 19752733; 10.11.1998 DE 19851724
(43) Veröffentlichungstag der Anmeldung: 02.06.1999
(73) Patentinhaber: Clariant GmbH, 65929 Frankfurt am Main (DE)
(72) Erfinder: Weferling, Norbert Dr., 50354 Hürth (DE); Schmitz, Hans-Peter, 50321 Brühl (DE)

(56) Entgegenhaltungen:
- US-A- 2 957 931

## Beschreibung

Die Erfindung betrifft ein Verfahren zur Herstellung von Aryl-alkylphosphinsäuren und/oder deren Alkalisalzen durch Umsetzung von Olefinen mit Arylphosphonigen Säuren und/oder deren Alkalisalzen sowie die Verwendung der nach diesem Verfahren hergestellten Verbindungen.

Die Addition von Kohlenstoff-Kohlenstoff-Doppelbindungen an Phenylphosphonige Säure zu Phosphinsäurederivaten mit zwei Phosphor-Kohlenstoff-Bindungen ist im Prinzip bekannt, führt jedoch zu unbefriedigenden Ausbeuten (Houben-Weyl, Methoden der organischen Chemie, Bd. XII/1, 4. Auflage 1963, S. 228 ff; und Bd. E2, 1982, S. 123 ff). Auch wird oft ein Gemisch von Reaktionsprodukten erhalten, welches mühsam aufbereitet werden muß.

Insbesondere bei Einsatz von nicht durch elektronenziehende Substituenten aktivierten Olefinen wie alpha-Olefinen, Cycloolefinen, Dienen oder Cyclodienen gelingt es nach der vorgenannten Methode nicht, die gewünschten Zielverbindungen in für technische Synthesen zufriedenstellenden Ausbeuten herzustellen.

In der US-A-2 957 931 werden eine Vielzahl von Verbindungen und Verfahren zu deren Herstellung beschrieben, die eine Phosphor-Kohlenstoff Bindung enthalten. Es werden jedoch nur Verbindungen mit einer relativ langen Kohlenstoffkette erhalten, die Ausbeuten und Reinheiten der erhaltenen Produkte erscheinen fraglich, zudem werden regelmäßig nur Produktmischungen erhalten, die schwer oder gar nicht trennbar sind.

Der Erfindung liegt daher die Aufgabe zugrunde, ein Verfahren zur Herstellung von Aryl-alkylphosphinsäuren oder deren Alkalisalzen durch Umsetzung von Olefinen mit Arylphosphonigen Säuren und/oder deren Alkalisalzen zur Verfügung zu stellen, welches die vorgenannten Nachteile vermeidet und in kurzen Zeiten zu hohen Ausbeuten an Arylalkylphosphinsäuren führt.

Diese Aufgabe wird gelöst durch ein Verfahren der eingangs beschriebenen Art, dadurch gekennzeichnet, daß die Umsetzung in Gegenwart von Essigsäure und eines Radikalstarters erfolgt und dass es sich bei den Olefinen um Ethylen, n-, i-Propylen, n-, i-Buten, n-, i-Penten, n- und/oder i-Hexen handelt.

Bevorzugt handelt es sich bei der Arylphosphonigen Säure und/oder deren Alkalisalze um Phenylphosphonige Säure und/oder deren Alkalisalze.

Bevorzugt handelt es sich bei dem Aryl-Rest der Aryl-alkylphosphinsäuren und Arylphosphonigen Säuren um Aromaten mit 6 bis 12 C-Atomen, die mit Halogenen, Hydroxyl-, Aryl-, Alkyl-, Ether-, Ester-, Keto-,Carboxyl-, Sulfonyl- und/oder Chloralkylgruppen einfach oder mehrfach substituiert sein können.

Bevorzugt werden als Radikalstarter solche mit einer Azo-Gruppe eingesetzt, die kationisch oder nicht-kationisch sind.

Als kationische Radikalstarter werden bevorzugt 2,2'-Azobis(2-amidinopropan)dihydrochlorid oder 2,2'-Azobis(N,N'-dimethylenisobutyramidin)dihydrochlorid eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt erfolgt die Umsetzung bei einer Temperatur von 40 bis 130 °C.

Besonders bevorzugt erfolgt die Umsetzung bei einer Temperatur von 60 bis 100 °C.

Insbesondere wird das Verfahren bevorzugt bei einer Temperatur von 80 bis 95 °C ausgeführt.

Bevorzugt erfolgt die Umsetzung in einem Druckreaktor. Dies gilt insbesondere, wenn der Siedepunkt der Olefine unterhalb der Reaktionstemperatur liegt.

Die Erfindung betrifft auch die Verwendung der nach dem vorstehend beschriebenen Verfahren erhaltenen Aryl-alkylphosphinsäuren und/oder deren Alkalisalzen zur Herstellung von Flammschutzmitteln.

Die Erfindung betrifft ebenfalls die Verwendung der nach dem vorstehend beschriebenen Verfahren erhaltenen Aryl-alkylphosphinsäuren und/oder deren Alkalisalzen zur Herstellung von Flammschutzmitteln für thermoplastische Polymere wie Polyethylenterephthalat, Polybutylenterephthalat, Polystyrol oder Polyamid und für Duroplaste.

Die nach dem vorstehend beschriebenen Verfahren erhaltenen Aryl-alkylphosphinsäuren und/oder deren Alkalisalze finden auch Verwendung als Additive in polymeren Massen, als Extraktionsmittel und oberflächenaktive Mittel.

Die Erfindung wird durch das nachstehenden Beispiel erläutert.

### Beispiel 1

500 g (3,5 Mol) Phenylphosphonige Säure wurden zusammen mit 4 kg Essigsäure in einem 16-L-Druckreaktor eingefüllt. Anschließend wurde unter Rühren bis auf 85 °C Innentemperatur aufgeheizt und soviel Ethylen aufgedrückt, bis bei 5 bar eine Sättigung erreicht war. Danach wurden 27 g (100 mMol, entspricht 3 Mol%, bezogen auf die eingesetzte Phenylphosphonige Säure) 2,2'-Azobis(2-amidinopropan)dihydrochlorid, gelöst in 100 ml Wasser innerhalb 3 Stunden zudosiert. Die exotherme Reaktion wurde mittels der Dosiergeschwindigkeit der vorgenannten Radikalstarterlösung so gesteuert, daß max. 95°C Reaktionstemperatur erreicht wurde. Während der weiteren Reaktion wurde Ethylen so nachgeführt, daß der Druck über die gesamte Dauer des Versuchs auf etwa 5 bar gehalten wurde. Anschließend ließ man noch 3 h bei 85 °C nachreagieren. Dann wurde der Reaktor entspannt und abgekühlt. Die Ausbeute betrug 4,7 kg (100 % der Theorie).

| | |
|---|---|
| ³¹P-NMR-Analyse: Phenylphosphonige Säure: | 1,3 Mol% |
| Phenyl-ethylphosphinsäure | 85,2 Mol% |
| Phenyl-butylphosphinsäure | 10,0 Mol% |
| unbekannte Komponenten | 3.5 Mol% |

## Patentansprüche

1. Verfahren zur Herstellung von Aryl-alkylphosphinsäuren und/oder deren Alkalisalzen durch Umsetzung von Olefinen mit Arylphosphonigen Säuren und/oder deren Alkalisalzen, **dadurch gekennzeichnet, daß** die Umsetzung in Gegenwart von Essigsäure und eines Radikalstarters erfolgt und daß es sich bei den Olefinen um Ethylen, n-, i-Propylen, n-, i-Buten, n-, i-Penten, n- und/oder i-Hexen handelt.

2. Verfahren nach Anspruch 1, **dadurch gekennzeichnet, daß** es sich bei der Arylphosphonigen Säure und/oder deren Alkalisalze um Phenylphosphonige Säure und/oder deren Alkalisalze handelt.

3. Verfahren nach Anspruch 1 oder 2, **dadurch gekennzeichnet, daß** es sich bei dem Aryl-Rest der Aryl-alkylphosphinsäuren und Arylphosphonigen Säuren um Aromaten mit 6 bis 12 C-Atomen handelt, die mit Halogenen, Hydroxyl-, Aryl-, Alkyl-, Ether-, Ester-, Keto-,Carboxyl-, Sulfonyl- und/oder Chloralkylgruppen einfach oder mehrfach substituiert sein können.

4. Verfahren nach einem oder mehreren der Ansprüche 1 bis 3, **dadurch gekennzeichnet, daß** als Radikalstarter solche mit einer Azo-Gruppe eingesetzt werden, die kationisch oder nicht-kationisch sind.

5. Verfahren nach einem oder mehreren der Ansprüche 1 bis 4, **dadurch gekennzeichnet, daß** als kationische Radikalstarter 2,2'-Azobis(2-amidinopropan)dihydrochlorid oder 2,2'-Azobis(N,N'dimethylenisobutyramidin)dihydrochlorid eingesetzt wird.

6. Verfahren nach einem oder mehreren der Ansprüche 1 bis 5, **dadurch gekennzeichnet, daß** die Umsetzung bei einer Temperatur von 40 bis 130 °C erfolgt.

7. Verfahren nach einem oder mehreren der Ansprüche 1 bis 6, **dadurch gekennzeichnet, daß** die Umsetzung bei einer Temperatur von 60 bis 100 °C erfolgt.

8. Verfahren nach einem oder mehreren der Ansprüche 1 bis 7, **dadurch gekennzeichnet, daß** die Umsetzung bei einer Temperatur von 80 bis 95 °C erfolgt.

9. Verfahren nach einem oder mehreren der Ansprüche 1 bis 8, **dadurch gekennzeichnet, daß** die Umsetzung in einem Druckreaktor erfolgt.

10. Verwendung der nach dem Verfahren der Ansprüche 1 bis 9 erhaltenen Aryl-alkylphosphinsäuren und/oder deren Alkalisalzen zur Herstellung von Flammschutzmitteln.

11. Verwendung der nach dem Verfahren der Ansprüche 1 bis 9 erhaltenen Aryl-alkylphosphinsäuren und/oder deren Alkalisalzen zur Herstellung von Flammschutzmitteln für thermoplastische Polymere wie Polyethylenterephthalat, Polybutylen- terephthalat, Polystyrol oder Polyamid und für Duroplaste

12. Verwendung der nach dem Verfahren der Ansprüche 1 bis 9 erhaltenen Aryl-alkylphosphinsäuren und/oder deren Alkalisalzen als Additive in polymeren Formmassen, als Extraktionsmittel und oberflächenaktive Mittel.

## Claims

1. A process for preparing arylalkylphosphinic acids and/or alkali metal salts thereof by reacting olefins with arylphosphonous acids and/or alkali metal salts thereof, which comprises carrying out the reaction in the presence of acetic acid and a free-radical initiator, and wherein the olefins are ethylene, n-propylene, isopropylene, n-butene, isobutene, n-pentene, isopentene, n-hexene and/or isohexene.

2. The process as claimed in claim 1, wherein the arylphosphonous acid and/or alkali metal salts thereof are phenylphosphonous acid and/or alkali metal salts thereof.

3. The process as claimed in claim 1 or 2, wherein the aryl radical of the arylalkylphosphinic acids and arylphosphonous acids is an aromatic system having from 6 to 12 carbon atoms, which can be monosubstituted or polysubstituted by halogens, hydroxyl, aryl, alkyl, ether, ester, keto, carboxyl, sulfonyl and/or chloroalkyl groups.

4. The process as claimed in one or more of claims 1 to 3, wherein, as free-radical initiators, use is made of those having an azo group, which are cationic or non-cationic.

5. The process as claimed in one or more of claims 1 to 4, wherein, as cationic free-radical initiators, use is made of 2,2'-azobis(2-amidinopropane) dihydrochloride or 2,2'-azobis(N,N'-dimethyleneisobutyramidine) dihydrochloride.

6. The process as claimed in one or more of claims 1 to 5, wherein the reaction is carried out at a temperature of from 40 to 130°C.

7. The process as claimed in one or more of claims 1 to 6, wherein the reaction is carried out at a temperature of from 60 to 100°C.

8. The process as claimed in one or more of claims 1 to 7, wherein the reaction is carried out at a temperature of from 80 to 95°C.

9. The process as claimed in one or more of claims 1 to 8, wherein the reaction is carried out in a pressure reactor.

10. The use of the arylalkylphosphinic acids and/or alkali metal salts thereof obtained by the process of claims 1 to 9 for preparing flame retardants.

11. The use of the arylalkylphosphinic acids and/or alkali metal salts thereof obtained by the process of claims 1 to 9 for preparing flame retardants for thermoplastic polymers such as poly(ethylene terephthalate), poly(butylene terephthalate), polystyrene or polyamide and for thermosetting plastics.

12. The use of the arylalkylphosphinic acids and/or alkali metal salts thereof obtained by the process of claims 1 to 9 as additives in polymeric molding compounds, as extraction media and surfactants.

## Revendications

1. Procédé pour la préparation d'acides aryl-alkylphosphiniques et/ou de leurs sels de métaux alcalins par réaction d'oléfines avec des acides arylphosphoneux et/ou leurs sels de métaux alcalins, **caractérisé en ce qu'**on réalise la réaction en présence d'acide acétique et d'un amorceur radicalaire et **en ce qu'**il s'agit pour les oléfines d'éthylène, de n-, 1-propylène, de n-, i-butène, de n-, i-pentène, de n- et/ou i-hexène.

2. Procédé selon la revendication 1, **caractérisé en ce qu'**il s'agit pour l'acide arylphosphoneux et/ou de ses sels de métaux alcalins d'acide phénylphosphoneux et/ou de ses sels de métaux alcalins.

3. Procédé selon la revendication 1 ou 2, **caractérisé en ce qu'**il s'agit pour le reste alkyle des acides aryl-alkylphosphiniques et arylphosphoneux de composés aromatiques avec de 6 à 12 atomes de carbone, qui peuvent être substitués une ou plusieurs fois par des halogènes, des groupes hydroxyle, aryle, alkyle, éther, ester, céto, carboxyle, sulfonyle et/ou chloroalkyle.

4. Procédé selon une ou plusieurs des revendications 1 à 3, **caractérisé en ce qu'**on utilise comme amorceurs radicalaires ceux ayant un groupe azoïque, qui sont cationiques ou non cationiques.

5. Procédé selon une ou plusieurs des revendications 1 à 4, **caractérisé en ce qu'**on utilise comme amorceurs radicalaires cationiques le 2,2'-azobis(2-amidinopropane) dichlorhydrate ou le 2,2'-azobis(N,N'-diméthylèneisobutyramidine)dichlorhydrate.

6. Procédé selon une ou plusieurs des revendications 1 à 5, **caractérisé en ce qu'**on réalise la réaction à une température de 40 à 130°C.

7. Procédé selon une ou plusieurs des revendications 1 à 6, **caractérisé en ce qu'**on réalise la réaction à une température de 60 à 100°C.

8. Procédé selon une ou plusieurs des revendications 1 à 7, **caractérisé en ce qu'**on réalise la réaction à une température de 80 à 95°C.

9. Procédé selon une ou plusieurs des revendications 1 à 8, **caractérisé en ce qu'**on réalise la réaction dans un réacteur sous pression.

10. Utilisation des acides aryl-alkylphosphiniques et/ou de leurs sels de métaux alcalins obtenus selon le procédé des revendications 1 à 9 pour la préparation d'agents ignifugeants.

11. Utilisation des acides aryl-alkylphosphiniques et/ou de leurs sels de métaux alcalins obtenus selon le procédé des revendications 1 à 9 pour la préparation d'agents ignifugeants pour les polymères thermoplastiques comme le polytéréphtalate d'éthylène, le polytéréphtalate de butylène, le polystyrène ou le polyamide et pour les duroplastes.

12. Utilisation des acides aryl-alkylphosphiniques et/ou de leurs sels de métaux alcalins obtenus selon le procédé des revendications 1 à 9 comme additifs dans des matières de moulages polymères, comme agents d'extraction et agents tensio-actifs.
